Europäisches Patentamt

(19) European Patent Office

Office européen des brevets

(11) Numéro de publication : **0 445 014 A1**

## (12) DEMANDE DE BREVET EUROPEEN

(21) Numéro de dépôt : **91400499.9**

(22) Date de dépôt : **25.02.91**

(51) Int. Cl.⁵ : **F16B 2/10, F16B 7/22, E04G 7/30**

(30) Priorité : 26.02.90 FR 9002326

(43) Date de publication de la demande :
04.09.91 Bulletin 91/36

(84) Etats contractants désignés :
DE GB

(71) Demandeur : **Roux, Marcel Henri René
Saint-Martin de Brethencourt
F-78660 Ablis Yvelines (FR)**

(72) Inventeur : **Roux, Marcel Henri René
Saint-Martin de Brethencourt
F-78660 Ablis Yvelines (FR)**

(74) Mandataire : **Lordonnois, Michel
B.P. 4
F-91230 Montgeron (FR)**

(54) Dispositif à mâchoires perfectionné pour l'assemblage d'éléments tubulaires.

(57) Ce dispositif à mâchoires pivotantes (6) est constitué d'une chape (7) qui porte latéralement ces mâchoires entre ses bras inférieur et supérieur, lesquelles mâchoires sont contraintes à l'ouverture par la détente d'une lame de ressort (13) maintenue entre elles suite au dégagement ascendant partiel d'une clavette (9), hors de son logement (8), et comportant une partie basse (18) de section triangulaire ayant un sommet, correspondant à la face avant de la clavette, profilé en queue d'aronde dont les rainures latérales servent de butée d'ouverture maximale des mâchoires, lesquelles sont contraintes, inversement, à se fermer sur une nervure longitudinale (3), de forme sensiblement en queue d'aronde, portée par un élément tubulaire vertical (1) d'une structure, lorsque la clavette est enfoncée à force dans son logement (8) et qu'elle agit sur les rampes (19a) descendantes des talons (19) des mâchoires.

EP 0 445 014 A1

Jouve, 18, rue Saint-Denis, 75001 PARIS

**Fig.2**

# DISPOSITIF A MACHOIRES PERFECTIONNE POUR L'ASSEMBLAGE D'ELEMENTS TUBULAIRES

La présente invention se rapporte à un dispositif à mâchoires perfectioné pour l'assemblage d'éléments tubulaires et, plus particulièrement, elle concerne un tel dispositif à mâchoires pivotantes dont la mise en position de fermeture est commandée par l'enfoncement, dans la chape qui les porte, d'une clavette de profil spécifique et dont la mise en position d'ouverture se produit sous la contrainte d'un ressort situé entre elles suite au dégagement ascendant de la clavette partiellement hors de son logement. La présente invention concerne également les profilés tubulaires spécifiques utilisés avec ce type de dispositif d'assemblage à mâchoires pivotantes.

Dans la technique actuelle de construction d'échafaudages tubulaires et de constructions similaires, on connait un type de dispositif d'assemblage à mâchoires mobiles utilisé entre les montants verticaux et les traverses horizontales de la construction tubulaire envisagée. C'est le cas, en particulier, du dispositif d'assemblage d'équerre entre des éléments tubulaires faisant l'objet de la demande de brevet français n°89.16.025 au nom du demandeur.

Ce dispositif est constitué par une chape, montée sur chacune des extrémités d'une traverse tubulaire, et com portant deux mâchoires mobiles adaptées pour s'enclencher sur des nervures longitudinales, en forme de queue d'aronde, dont sont pourvus les montants tubulaires verticaux. Dans ce dispositif antérieur, ces mâchoires sont commandées manuellement en position de fermeture et en position d'ouverture et maintenues dans ses positions par une clavette de verrouillage et de déverrouillage respectivement. De plus, la chape de support de ces mâchoires est pourvue sur sa face avant d'un téton, situé entre ces dernières et prévu pour s'engager dans un orifice pratiqué dans l'âme de la nervure en queue d'aronde du montant, à l'emplacement choisi pour la fixation de l'extrémité de la traverse tubulaire portant ce dispositif.

Bien que ce dispositif d'assemblage d'équerre réponde qux besoins que l'on attendait de lui dans les constructions tubulaires, il s'avère qu'il présente certains inconvénients en ce sens que la manoeuvre de ses mâchoires en position de fermeture est malaisée du fait que le monteur doit se servir pratiquement de ses deux mains, l'une pour soutenir la traverse et engager le téton du dispositif dans l'orifice de la nervure du montant et l'autre pour maintenir les mâchoires ouvertes afin de les engager à cheval sur la nervure puis les mettre en position de fermeture sur celle-ci et, au besoin, aider la clavette de verrouillage à s'enfoncer dans son logement. Par ailleurs, l'inventeur s'est aperçu qu'il était malaisé de démonter une traverse horizontale dans une construction tubulaire achevée par suite du manque d'élasticité dans les montants et à cause de la présence du téton si l'orifice de la nervure dans lequel il était engagé n'avait pas été prévu avec une forme oblongue suffisamment allongée ou si le téton était pour sa part d'une longueur trop forte et pénétrait trop profondément dans l'orifice de la nervure.

En conséquence, c'est pour éviter la majeure partie de ces inconvénients du dispositif d'assemblage antérieur que l'inventeur a apporté à celui-ci de nombreux perfectionnements parmi lesquels on peut citer, avant d'en faire la description détaillée en relation avec les dessins ci-joints, entre autres:

a) un moyen élastique amenant les mâchoires en position ouverte et les maintenant à cette position lorsque la clavette est dégagée partiellement de son logement;

b) un profilage spécifique d'une partie de la clavette pour empêcher les mâchoires de s'ouvrir plus fort que l'écartement nécessaire à leur engagement à cheval sur une nervure de montant tubulaire;

c) un profilage spécifique d'une autre partie de la clavette devant coopérer avec une rampe prévue sur le talon de chacune des mâchoires afin que cellesci soient amenées en position de fermeture par l'enfoncement de la clavette dans son logement;

d) supression du téton avant de la chape et supportage de celle-ci au montage sur un montant par une assise fournie par le sectionnement d'une partie d'une protubérance longitudinale prévue sur l'extérieur de la nervure en queue d'aronde de ce montant.

Ainsi, conformément à la présente invention, ce dispositif à mâchoires pivotantes pour l'assemblage d'éléments tubulaires, constitué d'une chape montée à l'extrémité d'une traverse tubulaire horizontale et suportant latéralement les mâchoires, lesquelles sont conçues pour s'accrocher, en position de fermeture, par leurs mors de part et d'autre d'une nervure longitudinale, en forme de queue d'aronde, d'un montant tubulaire vertical, et maintenues verrouillées à cette position par une clavette profilée enfoncée dans un logement vertical traversant la chape et agissant sur les talons des mâchoires et, inversement, une fois dégagée, libérant ces talons pour leur pivotement occasionnant l'ouverture de ces mâchoires, est remarquable par le fait qu'il comporte, incorporée entre les mâchoires, une lame de ressort adaptée pour les forcer en position d'ouverture lorsque la clavette est dégagée partiellement de son logement dans la chape, cette clavette comportant, à proximité de son extrémité inférieure, une partie, de section sensiblement triangulaire, dont le sommet est profilé en forme de queue d'aronde dont les rainures latérales sont conçues pour recevoir respectivement l'extrémité de chacun des talons de mâchoires et constituer un arrêt de pivotement de celles-ci lorsqu'elles sont contraintes à l'ouverture sous la force de détente de la lame de ressort, chacune des extrémités de talon de mâchoires comportant en outre, dans leur partie de coin supérieur, une découpe inclinée constituant une rampe adaptée pour coopérer avec un coin arrondi correspondant du bas de la partie de la clavette située au-dessous de la partie de section triangulaire de celle-ci, cet agencement étant tel que, lors de l'enfoncement de la clavette dans son logement, chaque coin arrondi agit respectivement sur une rampe de mâchoire et commande le début du pivotement de celle-ci vers sa position de fermeture, ce mouvement de pivotement étant ensuite poursuivi sous l'action de chacun des côtés latéraux coniques de la partie supérieure de la clavette jusqu'à ce que les mors des mâchoires butent dans les rainures latérales de la nervure longitudinale d'un montant.

A noter que, selon la présente invention, ce dispositif d'assemblage entre des éléments tubulaires est remarquable, en outre, par le fait qu'il est conçu pour s'accrocher sur une nervure de section sensiblement en queue d'aronde, c'est-à-dire en forme de trapèze dont la grande base extérieure est pourvue, dans sa partie médiane, d'une protubérance longitudinale ayant de préférence une section en demi-rond, laquelle protubérance est prévue pour être supprimée à l'emplacement choisi pour l'accrochage du dispositif sur une hauteur suffisante pour permettre le dégagement de ce dernier en position d'ouverture par relevage de l'extrémité de la traverse tubulaire qui le porte et, inversement, à l'extrémité inférieure de sa partie supprimée, cette protubérance sert d'appui inférieur pour la chape du dispositif dont les bords avant sont en appui sur le fond de cette partie supprimée.

De plus, et selon la présente invention, les mors des mâchoires sont pourvus chacun d'une saillie interne sur toute leur hauteur, cette saillie étant prévue pour être engagée dans un méplat ou lamage pratiqué dans les arêtes latérales de la nervure d'accrochage sur une hauteur sensiblement équivalente à celle des mâchoires afin que ces dernières, verrouillées en position de fermeture, soient immobilisées en position d'accrochage.

En outre, afin que le verrouillage des mâchoires en position de fermeture et d'accrochage fournit par la clavette soit équilibré sur chacun des talons de ces mâchoires par la position strictement médiane de cette clavette lors de son enfoncement dans son logement, ce logement est pourvu, dans les bras inférieur et supérieur de la chape, d'une nervure médiane adaptée pour servir de guide de coulissement à la clavette qui comporte, longitudinalement dans l'axe médian de sa face arrière, opposée aux mâchoires, une rainure dans laquelle sont engagées les dites nervures médianes du logement de clavette.

Par ailleurs, selon la présente invention, afin que ce dispositif à mâchoire puisse servir également à fixer des barres diagonales de triangulation ou de contreventement, le fond de l'évidement de la chape entre ses deux bras et en arrière de la clavette est creusé en arrondi afin de ménager un passage ou logement pour l'engagement libre d'un tenon d'extrémité de barre diagonale, ce tenon étant bien entendu pourvu d'une goupille empêchant son extraction de ce passage après montage.

D'autres caractéristiques de laprésente invention apparaîtront de la description suivante d'un mode de réalisation du dispositif à mâchoires perfectionné, donné à titre d'exemple non limitatif et représenté dans les dessins ci-joints dans lesquels:
   – la figure 1 est une vue en élévation extérieure du dispositif conforme à l'invention, avec ses mâchoires en position ouverte et sa clavette déclenchée en l'attente de son montage sur la nervure longitudinale d'un élément tubulaire vertical;
   – la figure 2 est une vue en coupe et en plan du dispositif dans la même position que celle de la figure 1, cette coupe étant faite, suivant les flèches II-II de cette figure, au niveau du dessus des mâchoires;
   – la figure 3 est une vue en coupe et en plan du dispositif similaire à la figure 2 mais avec les mâchoires en position fermée de montage sur la nervure de l'élément tubulaire;
   – la figure 4 est une vue en perspective de la clavette profilée du dispositif;
   – la figure 5 est une vue en coupe, prise selon la ligne AA de la figure 4, d'une partie de la clavette;
   – la figure 6 est une vue en coupe, prise selon la ligne BB de la figure 4, d'une autre partie inférieure de la clavette;
   – la figure 7 est une vue en coupe transversale prise sur un élément tubulaire portant le dispositif selon la présente invention à ses extrémités.

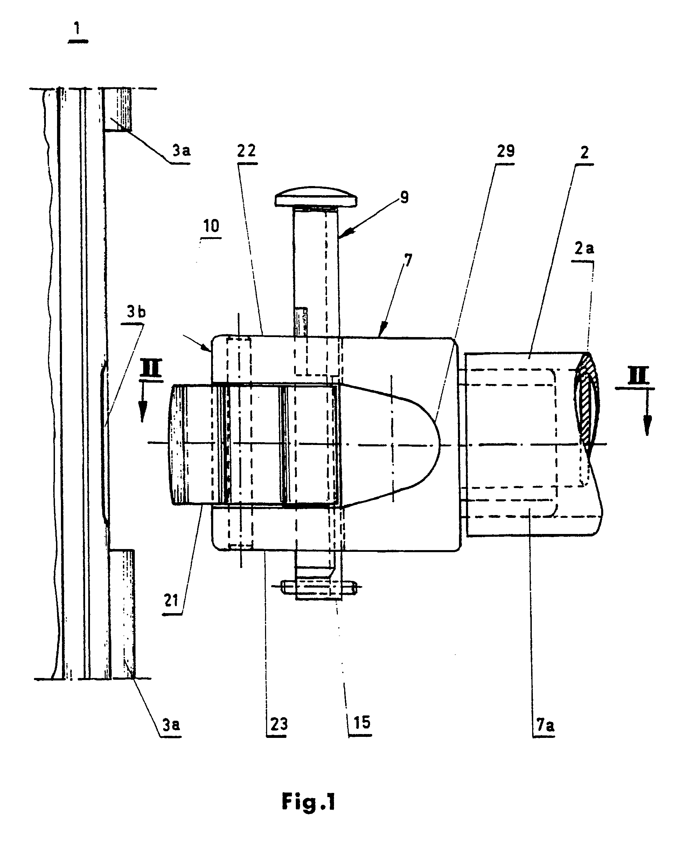

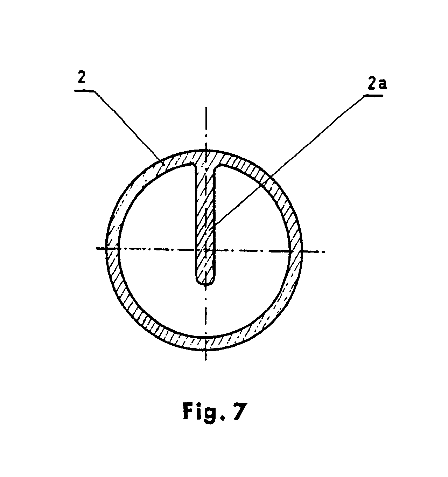

Comme on le voit dans les figures 1 à 3, le dispositif à mâchoires pour l'assemblage entre des éléments tubulaires 1, 2, dans lesquels l'élément 1 est sous forme d'un poteau vertical pourvu de nervures longitudinales 3 ayant une section de base en forme de queue d'aronde garnie sur sa grande face extérieure d'une protubérance semi-ronde 3a, et l'élément 2 est constitué par un tube pourvu intérieurement d'une nervure raidisseuse 2a (voir coupe sur cet élément figure 7).

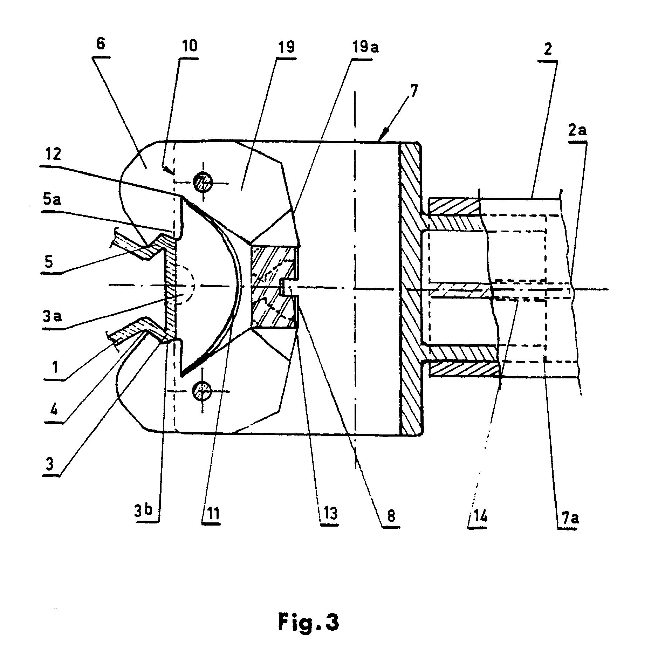

Le dispositif à mâchoires proprement dit est constitué d'une chape 7 entre les ailes de laquelle sont montées, latéralement de manière pivotante en 10, deux mâchoires 6 dont les bords libres ou mors 5 sont adaptés pour s'accrocher dans les rainures latérales 4 de la nervure longitudinale 3 du poteau 1. Chaque mâchoire est également pourvue sur toute la hauteur de sa face intérieure d'une partie saillante 5a adaptée pour pénétrer, en position de fermeture, dans un lamage ou méplat 3b prévu dans l'arête correspondante de lanervure longitudinale 3 à l'emplacement de l'accrochage du dispositif sur le poteau 1 (comme représenté au mieux dans la figure 3).

A noter également que la protubérance 3a de la nervure est supprimée, comme on le voit au mieux dans la figure 1, à l'emplacement d'accrochage du dispositif sur une hauteur adaptée pour permettre le dégagement ou l'engagement de ce dernier par inclinaison de l'élément tubulaire 2 qui le porte, la partie inférieure du sectionnement de la protubérance servant, inversement, d'appui de fixation du dispositif. Chaque mâchoire 6 comporte également, en arrière de sa partie saillante 5a, une rainure 12 adaptée pour recevoir l'une des extrémités d'une lame de ressort 11 contrainte entre les deux mâchoires et prisonnière entre les deux ailes de la chape 7 qui l'encadrent même en position d'ouverture maximale de ces mâchoires 6. Chacune des deux ailes ou bras de la chape 7 est transpercé verticalement par un logement 8, de section rectangulaire, dans lequel coulisse une clavette 9 guidée par une nervure ou ergot 13 interne à ce logement 8.

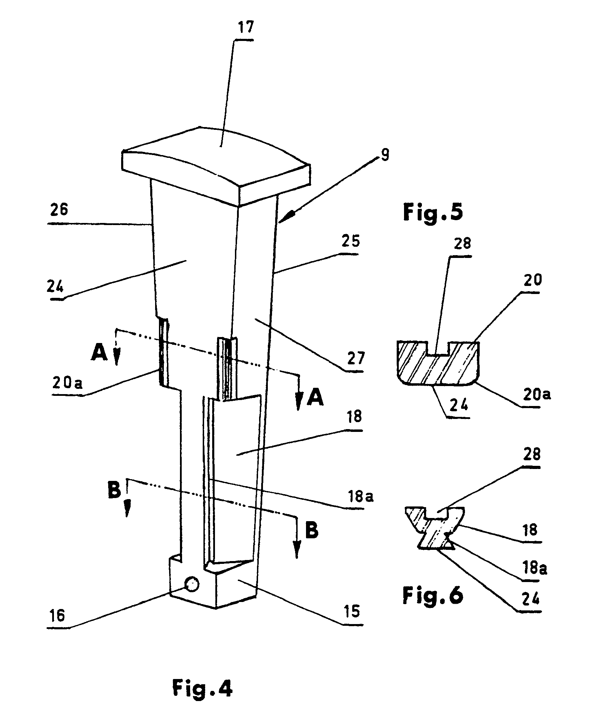

Comme on le voit au mieux dans la figure 4, la clavette 9 est profilée de manière très spécifique pour permettre l'ouverture des mâchoires lors de son dégagement partiel vers le haut de son logement 8 ainsi que pour commander leur fermeture lors de son engagement en force dans ce dernier. En effet, cette clavette comporte, de son extrémité inférieure 15, pourvue d'une orifice 16 pour une goupille anti-extraction totale (non représentée), à son extrémité supérieure, pourvue d'un chapeau débordant 17 empêchant la pénétration de corps étrangers dans le logement 8, une partie 18, de section triangulaire suivie par une partie 20, de section rectangulaire à coins avant arrondis 20a, elle-même suivie par la partie haute de la clavette, de section rectangulaire, dont les côtés largeur 26, 27 sont légèrement coniques en convergence vers la partie 18 de section triangulaire alors que ses côtés longueur, avant 24 et arrière 25, son parallèles entre eux sur toute la hauteur de la clavette, le côté arrière 25 comportant en outre, une rainure rectiligne 28, longitudinale et médiane, dans laquelle s'engagent les nervures ou ergots 13 internes aux logements 8 respectifs des deux ailes de la chape 7.

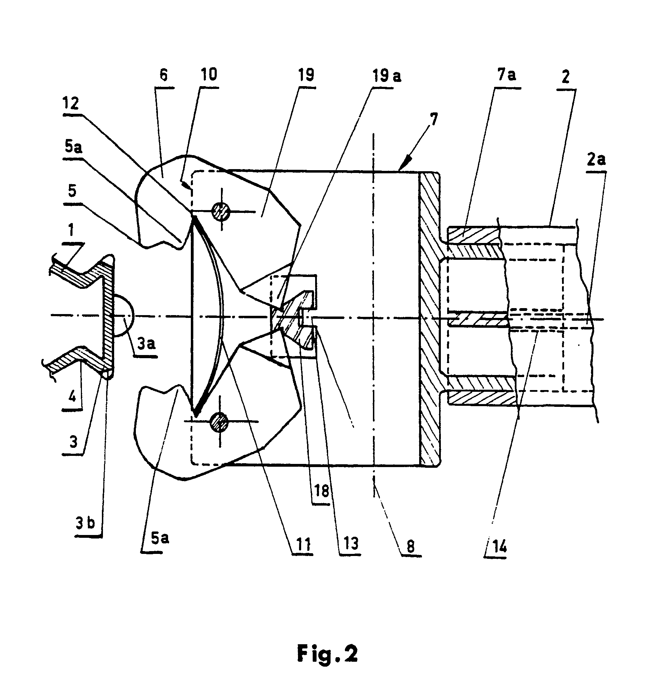

De manière très spécifique et selon l'invention, la partie 18 de section triangulaire de la clavette est prévue d'une hauteur légèrement supérieure à celle des talons 19 des mâchoires 6 et son arête, correspondant à la face avant 24, est usinée en forme de queue d'aronde, comme on le voit au mieux dans la figure 6, dont les rainures latérales 18a sont configurées pour recevoir les bords libres des talons 19 des mâchoires et leur servir de butée en fin du mouvement d'ouverture de celles-ci sous la détente de la lame de ressort 11 (voir figure 2). Par ailleurs, comme on le voit au mieux dans la figure 5, la partie 20 de section rectangulaire comportant des coins arrondis 20a correspondant à la face avant 24 est conçue pour commander, lors de l'enfoncement à force de la clavette, le début du mouvement de pivotement des mâchoires vers leur position de fermeture ou d'accrochage, les coins arrondis 20a agissant respectivement sur les rampes 19a prévues en pente descendante en direction de la clavette sur la partie supérieure des bords libres des talons 19 des mâchoires (voir figure 2).

A noter qu'en ce qui concerne la conformation de la chape 7 proprement dite, son évidement de montage des mâchoires 6 entre ses bras inférieur et supérieur est prolongé au-delà de la face arrière 25 de la clavette pour ménager un logement à fond arrondi 29 pour l'introduction éventuelle d'un tenon d'extrémité (non représenté) d'une barre diagonale lors du montage d'une structure tubulaire.

Dans un autre ordre d'idée, on notera également que le manchon 7a de fixation de la chape 7 du dispositif destiné à être engagé dans un élément tubulaire 2 pourvu d'une nervure raidisseuse interne 2a (figure 7) comporte une fente supérieure 14 adaptée pour permettre l'engagement de cette nervure 2a et, par suite, sert à mettre l'élément tubulaire 2 dans la position où il présente la meilleure résistance à la flexion.

Par ailleurs, on doit également noter que l'élément tubulaire 1, à nervures longitudinales 3 pour l'accrochage du dispositif, est prévu d'un diamètre intérieuradapté pour permettre l'introduction d'un tube métallique du commerce, de diamètre normalisé, qui pourra servir de raidiseur et augmentera la résistance, aussi bien à la flexion qu'à la compression, de cet élément tubulaire 1 qui peut être constitué en métal ou, pour certaines utilisations, en une matière plastique rigide et isolante quelconque à base de résine polyamide, telle que la matière commercialisée sous le nom de "Nylon® renforcé". Tous les organes composant le dispositif proprement dit sont également prévus constitués en métal ou en matière plastique rigide et isolante du même type que celle constituant l'élément tubulaire 1, l'élément tubulaire 2, prévu en métal, étant, dans ce dernier cas, gainé par un revêtement de matière plastique isolante.

## Revendications

1.- Dispositif à mâchoires pivotantes pour l'assemblage d'éléments tubulaires, constitué d'une chape montée à l'extrémité d'une traverse tubulaire horizontale et supportant latéralement les mâchoires, lesquelles sont conçues pour s'accrocher, en position de fermeture, par leurs mors de part et d'autre d'une nervure longitudinale, en forme de queue d'aronde, d'un montant tubulaire vertical, et maintenues verrouillées à cette position par une clavette profilée enfoncée dans un logement vertical traversant la chape et agissant sur les talons des mâchoires et, inversement, une fois dégagée, libérant ces talons pour leur pivotement occasionnant l'ouverture de ces mâchoires sous l'action d'une lame de ressort (11) incorporée entre les mâchoires (6) et adaptée pour forcer ces dernières en position d'ouverture lorsque la clavette (9) est dégagée partiellement de son logement dans la chape (8), dispositif caractérisé par le fait que la clavette comporte, à proximité de son extrémité inférieure (15), une partie (18), de section sensiblement triangulaire dont le sommet est profilé en forme de queue d'aronde dont les rainures latérales (18a) sont conçues pour recevoir respectivement l'extrémité de chacun des talons (19) de mâchoires et constituer un arrêt de pivotement de celles-ci lorsqu'elles sont contraintes à l'ouverture sous la force de détente de la lame de ressort (13), chacune des extrémités des talons de mâchoires comportant en outre, dans leur partie de coin supérieur, une découpe inclinée constituant une rampe (19a) adaptée pour coopérer avec un coin arrondi (20a) correspondant au bas de la partie de la clavette (9) située au-dessous de la partie (18) de section triangulaire de celle-ci.

2.- Dispositif selon la revendication 1, caractérisé par le fait que chaque coin arrondi (20a) de la clavette est conçu de manière à agir respectivement sur une rampe (19a) de mâchoire et pour commander le début du pivotement de celle-ci vers sa position de fermeture, ce mouvement de pivotement comprimant la lame de ressort (11) étant ensuite poursuivi sous l'action de chacun des côtés coniques (26, 27) de la partie supérieure de la clavette jusqu'à ce que les mors (5) des mâchoires butent dans les rainures latérales (4) de la nervure longitudinale (3) d'un montant (1), la lame de ressort (11) se trouvant bandée en incurvation en direction de la face correspondante de la clavette.

3.- Dispositif selon la revendication 1, conçu pour s'accrocher sur une nervure de section sensiblement en queue d'aronde et, de préférence, en forme de trapèze dont la grande base est éxtérieure, caractérisé par le fait que les mors (5) des mâchoires (6) sont pourvus chacun d'une saillie interne (5a) sur toute leur hauteur, cette saillie étant prévue pour être engagée dans un méplat ou lamage (3b) pratiqué dans les arêtes latérales de la nervure d'accrochage (3) sur une hauteur sensiblement équivalente à celle des mâchoires (6) afin que ces dernières, verrouillées en position de fermeture, soient immobilisées en position d'accrochage et que la nervure d'accrochage comportant sur sa grande base une protubérance longitudinale (3a) a celle-ci supprimée à l'emplacement d'accrochage des mâchoires du dispositif sur une hauteur suffisante pour permettre le dégagement de ce dernier en position d'ouverture par relevage de l'extrémité de la traverse tubulaire (2) qui le porte et, inversement, à l'extrémité inférieure de sa partie supprimée, cette protubérance (3a) sert d'appui inférieur pour la chape (7) du dispositif dont les bords avant sont en appui sur le fond de cette partie supprimée.

4.- Dispositif selon la revendication 1, caractérisé par le fait que le logement (8) de la clavette (9), dans chacun des bras inférieur et supérieur de la chape (7), est pourvu d'une nervure médiane (8) adaptée pour servir de guide de coulissement à la clavette qui comporte, longitudinalement dans l'axe médian de sa face arrière (25) opposée aux mâchoires (6), une rainure (28) dans laquelle sont engagées les dites nervures médianes du logement de clavette.

5.- Dispositif selon la revendication 1, caractérisé par le fait que le fond (29) de l'évidement de la chape (7) entre ses deux bras et en arrière de la clavette (9) est creusé en arrondi afin de ménager un passage ou logement pour l'engagement libre d'un tenon d'extrémité de barre diagonale.

6.- Dispositif selon la revendication 1, caractérisé par le fait que son manchon arrière (7a), prolongeant sa chape (7) et destiné à être engagé dans un élément tubulaire (2) pourvu d'une nervure raidisseuse interne (2a), comporte une fente supérieure (14) adaptée pour permettre l'engagement de cette nervure (2a) et, par suite, sert à mettre l'élément tubulaire (2) dans la position où il présente la meilleure résistance à la flexion.

7.- Dispositif selon l'une quelconque des revendications 1 à 6, caractérisé par le fait que tous les organes qui le constituent sont en métal.

8.- Dispositif selon l'une quelconque des revendications 1 à 7, caractérisé par le fait que tous les organes qui le constituent sont en une matière plastique rigide et isolante quelconque à base de résine polyamide, telle que la matière commercialisée sous le nom de "Nylon® renforcé".

9.- Profilé tubulaire à nervures longitudinales externes, de section sensiblement en forme de queue d'aronde, de préférence trapèzoïdale, adapté pour l'accrochage du disposituf selon la revendication 1, caractérisé par le fait que ses nervures longitudinales (3) sont pourvues sur leur face extérieure d'une protubérance longitudinale (3a) et que son diamètre intérieur est adapté pour permettre l'introduction d'un tube métallique du commerce, de diamètre normalisé, qui pourra servir de raidiseur et augmentera la résistance, aussi bien à la flexion qu'à la compression, de cet élément tubulaire 1.

10.- Profilé tubulaire selon la revendication 9, caractérisé par le fait qu'il esr fabriqué en métal.

11.- Profilé tubulaire selon la revendication 9, caractérisé par le fait qu'il est fabriqué en une matière plastique rigide et isolante quelconque à base de résine polyamide, telle que la matière commercialisée sous le nom de "Nylon® renforcé".

**Fig.1**

**Fig.2**

**Fig.3**

Fig.5

Fig.4

Fig.6

**Fig. 7**

EP 0 445 014 A1

Office européen
des brevets

**RAPPORT DE RECHERCHE EUROPEENNE**

Numero de la demande

EP 91 40 0499

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WO-A-8 202 733 (ROSE)<br>* Revendications; figures * <br>--- | 1 | F 16 B 2/10<br>F 16 B 7/22<br>E 04 G 7/30 |
| A | GB-A-2 154 645 (CONSTRUCCIONES METALICAS SAF S.A.)<br>* Page 1, ligne 115 - page 2, ligne 2; figure 9 *<br>--- | 1 | |
| A | US-A-3 952 382 (VAAGE)<br>* Colonne 2, ligne 4 - colonne 8; figures 1,4 *<br>--- | 1 | |
| A | FR-A-2 255 438 (BUCHNER et al.)<br>* Revenndication 11; figures 1,3 *<br>--- | 1 | |
| A | DE-U-8 806 128 (ROSE)<br>----- | | |

**DOMAINES TECHNIQUES RECHERCHES (Int. Cl.5)**

E 04 G
E 04 B
F 16 B

Le présent rapport a été établi pour toutes les revendications

| Lieu de la recherche | Date d'achèvement de la recherche | Examinateur |
|---|---|---|
| LA HAYE | 22-05-1991 | CALAMIDA G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

12